# EUROPEAN PATENT APPLICATION

(11) **EP 4 647 038 A2**
(43) Date of publication of application: **12.11.2025**
(21) Application number: 25189375.6
(22) Date of filing: 19.08.2020
(51) Int. Cl.: A61C 17/22

(54) **LIGHT EMITTING OSCILLATING TOOTHBRUSH**

(30) Priority: 19.08.2019 US 201962888692 P; 11.10.2019 US 201962914080 P; 13.01.2020 US 202062960229 P
(62) Divisional of application: 20854054.2
(71) Applicant: Oralucent, Inc., Long Beach CA 90803 (US)
(72) Inventor: LAWRENCE, Timothy, Long Beach, 90803 (US); SHEPHERD, Greg, Fruitland Park, 34731 (US)
(74) Representative: Ashton, Gareth Mark

(57) **Abstract**

An electric toothbrush includes a handle with a motor and a light source located in a proximal end. A brush head is in a distal end of the toothbrush, and a drive shaft conveys kinetic energy from the motor to the brush head. The drive shaft includes a light guide from the light source to the distal end and contains two layers of an optical medium of differing refractive indices to enable TIR within the light guide. The brush has a tuft plate having bristles and is made of a polymer such that the water contact angle of the tuft plate is less than 90 degrees and is at least partially transparent. The handle and the tuft plate have electrical contacts to make a contact sensor and a movement sensor provides movement data. A computing device processes movement and contact data to determine when to activate the light.

## Description

### BACKGROUND OF THE INVENTION

Electric toothbrushes can be classified according to their type of cleaning action. One very popular design is the rotation oscillation toothbrush, often called a spin brush which indicates a brush action in which the brush head rotates in alternating directions along an axis roughly perpendicular to the shaft of the toothbrush. Typically, the oscillation amplitude is about 30 degrees, corresponding to about 2 mm displacement on the outer rim of the rotating head and the frequency is generally between 20 Hz to 120 Hz. Another popular spin brush design employs a unidirectional circular rotation, a brush action in which the brush head rotates in one direction only. Another popular design uses a combination of two oscillating brush heads, one which rotates from side to side and a second head which does not rotate at all but moves backwards and forwards along an axis parallel to the shaft. Yet another popular design is the "sonic toothbrush." Typically, the sonic toothbrush oscillates the brush head on an axis that is roughly parallel to the shaft of the toothbrush, typically at a frequency of at least 250 Hz with a rotation amplitude of less than 5 degrees.

Regardless of design, generally all electric power toothbrushes share one trait in common; they contain a drive shaft which conveys kinetic energy from a motor located in the proximal end of the toothbrush to the bristles located in the distal of the toothbrush.

The inventors have previously shown how a light emitting toothbrush can be constructed using a light source and employing a current signal loop to activate an alarm which protects the users eyes from bright blue light emanating from the toothbrush (see patent publications US 9,198,502 B2 and US 2019/0167400 A1, the entire disclosure of which is incorporated herein by reference). Some of the material in this application may refer to concepts discussed in those prior applications.

The electronics required to generate light also produces heat and consume space. When these electronics are located inside the brush head it increases the size of the brush head which can be uncomfortable for the end user. Furthermore, if the brush head is replaceable, the power source must be connected to the head of the toothbrush via a press fit electrical connection. Such connections are prone to water exposure, electrical shorts, debris contamination and damage from electrolysis. Locating the light source in the handle has several advantages since there is no need for electronics in the head of the toothbrush.

### SUMMARY OF THE INVENTION

The inventors have constructed a light emitting toothbrush in which a stationary light source is located inside the handle of the toothbrush and projects blue light with a wavelength in the range of 400nm to 500nm through a moving optical light guide located within or comprising at least a portion of drive shaft of an electrically powered toothbrush, to the head of the toothbrush, where the light is diffusely reflected by the chassis of the white replacement brush head through a transparent or translucent brush head containing tufts of transparent or semi-transparent bristles. In this invention, the drive shaft transmits mechanical power to the brush head whilst simultaneously transmitting therapeutic blue light through a light guide contained in or comprising the core of the drive shaft. This innovative design reduces the space required to transport light from the handle to the head of the toothbrush and exploits the mechanical shaft to provide a dual function; providing both transfer of kinetic energy and a protective housing for the light guide. If the brush head is replaceable, a specialized connector fastens the proximal drive shaft to the distal drive shaft or replaceable brush head while also acting as an optic ferrule for the light guide. This design approach can be adapted to all of the popular electric powered toothbrush designs that contain a drive shaft.

Furthermore, we have created a conductive path through the metal axial pin, located in the head of the toothbrush, around which the tufts of the toothbrush spin, thus enabling the electrical sensing of the toothbrush head being placed in the mouth. This sensing can employ a variety of electrical sensing methods including a current loop or capacitive sensing.

In addition, we have developed an algorithm which combines data from a movement sensor and a contact sensor so that when time-series data from the combination of sensors is analyzed, certain classification features can readily be extracted and used to rapidly control the function of the light so that it only activates in the mouth of the user.

The blue light can be injected into a fiber optic light guide using a variety of methods. If the light source is a laser diode then a thin fiber optic light guide of less than 1mm diameter can be used. Laser diodes inherently concentrate their light more than LEDs, so a collimator or concentrator is not essential to interface with a light guide. However, laser diodes typically have a beam divergence indicated by the fast axis and slow axis. For maximum efficiency, a concentrator, such as a lens, may be used to reduce beam divergence to an angle that satisfies the maximum angle of incidence of the fiber optic light guide used inside the drive shaft. Collimating the laser beam to parallel rays is not preferred, because this could create a safety concern and is not needed as the beam will typically be diffused at the brush head.

However, given the additional cost, regulatory and safety constraints of lasers, an LED light source is preferred. We have found that LED light in a toothbrush can be concentrated through various methods including but not limited to a refractive dome lens, a TIR concentrator, such as Carclo Part Number 10356, a mirror tube, a white reflector tube, or a combination of these. We have obtained acceptable results using a combination of a dome lens and a white reflector tube or mirror tube connecting the surface of the LED to the light guide located in the drive shaft. The light guide should have a diameter less than 4 mm but preferably about 2 mm. Preferably, the diameter of the light source and dome lens should both be less than or equal to the diameter of the light guide. Preferably the light source, which can be an LED or a laser diode, should output at least 10 mW of radiant power but preferably about 100 mW of radiant power and preferably no more than 1,000 mW of radiant power. Since total internal reflection is dependent on the angle of incidence, preferably a dome lens should be rated to concentrate the beam to within 30 degrees or less.

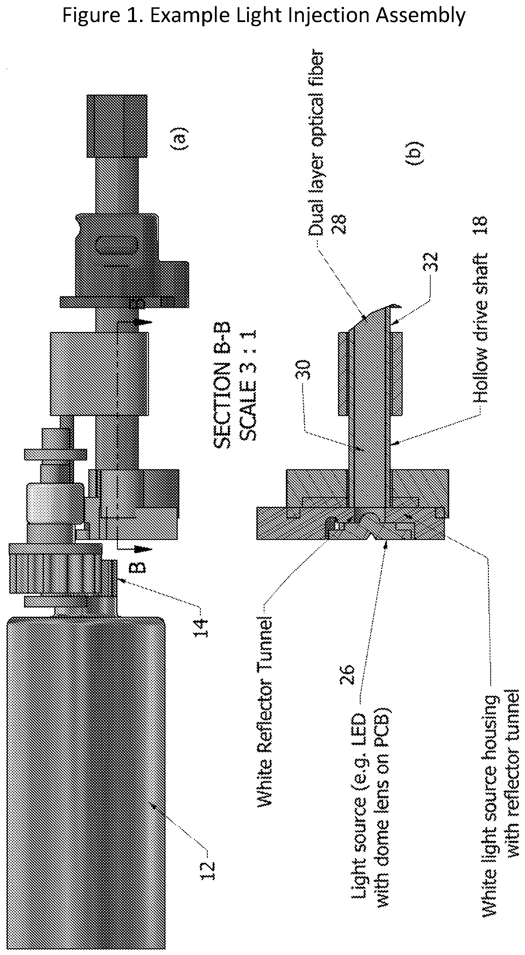

Since the light guide is part of the drive shaft it will move very rapidly. Therefore, preferably the light source and optical concentrator components are less than 10 mm distance from the aperture of the light guide but do not touch it. Preferably the light source is be closer to the distal portion of the toothbrush than the motor and the axis central to the light path emanating from the light source is coaxially aligned with the drive shaft axis to within 15 degrees or less. The white reflector tube reflects light according to a near Lambertian pattern, thus recapturing and redirecting light such that some of the reflected light conforms to the maximum angle of incidence required of the light guide, thus increasing the proportion of optical energy captured by the light guide. The reflector tunnel or mirror tube can be combined with the dome lens and should have a diameter larger than the optical fiber. The LED preferably is distanced from the fiber optic tube so that light is injected at less than the maximum angle of incidence of the light guide required for total internal reflection. An example is illustrated in Figure 1. If a mirror tube is used, the dome lens should preferably be completed inserted into the mirror tube.

The light source can emit a single wavelength with a peak bandwidth in the range of 400nm to 500 nm or multiple wavelengths selected from the blue spectrum 400nm to 500nm, red spectrum 600nm to 700nm and infrared spectrum 700nm to 1200 nm.

### BRIEF DESCRIPTION OF THE DRAWINGS

The invention will be better understood by a reading of the Detailed Description of the Examples of the Invention along with a review of the drawings, in which:
Figure 1(a) is a schematic diagram of the mechanical elements in a motorized toothbrush with a light injection assembly and 1(b) is a sectional view of a portion thereof;
Figure 2 is a perspective distal end view of a Type 1 gear assembly of light emitting dual direction rotating and oscillating spin brush;
Figure 3 is a schematic view of a mirror tube conduit to light guide in drive shaft;
Figure 4(a) is a distal end upper perspective view of a drive mechanism for a light emitting sonic toothbrush with a light source located in the handle; (b) is a proximal upper end view thereof; (c) is a distal end lower perspective view thereof; (d) is a side view thereof; (e) is a partial sectional view thereof; (f) is an enlarged partial sectional view thereof;
Figure 5 is a schematic view of a light guide designed for total internal reflection;
Figure 6(a) is a vertical sectional view of a detachable head of light emitting sonic toothbrush; (b) is horizontal sectional view thereof; (c) is an end view: and (d) is a proximal end perspective view thereof;
Figure 7 is a schematic sectional view of a 3-layer draft shaft and optical light guide;
Figure 8 is a schematic sectional view of a 2-layer draft shaft and optical light guide;
Figure 9 is a partial cross section view of a drive shaft connector and optic ferrule;
Figure 10(a) is a distal end perspective view of a replaceable brush head; (b) is a rotated view thereof; (c) is a proximal end perspective view thereof; (d) is an enlarged partial view thereof;
Figure 11 is a partial cross sectional view of a spin brush head;
Figure 12(a) is a longitudinal sectional view of a toothbrush showing placement of sensing electrodes; (b) is a cross sectional view thereof;
Figure 13 is a schematic sectional view of a form of conductive bristle tuft mounting;
Figure 14 is a state diagram of a 2-phase light activation alarm;
Figure 15 is a data plot showing average X and Y positions during brush head contact;
Figure 16 is a data plot showing average X and Y volatility measured for 4 scenarios;
Figure 17 is a Spectrogram of filtered Y tether data;
Figure 18(b) is a Perspective view of a toothbrush; (a) shows a definition of axes for a 3-axis analysis of the toothbrush motion; (c) shows a definition of axes for a 6-axis analysis of the toothbrush motion, defining the toothbrush movement sensor coordinate system;
Figure 19 is a state transition diagram for a contact and movement light activation system;
Figure 20 is a data plot of XYZ acceleration and current loop voltage during a typical manual brushing movement over a period of about ten seconds.

### DETAILED DESCRIPTION

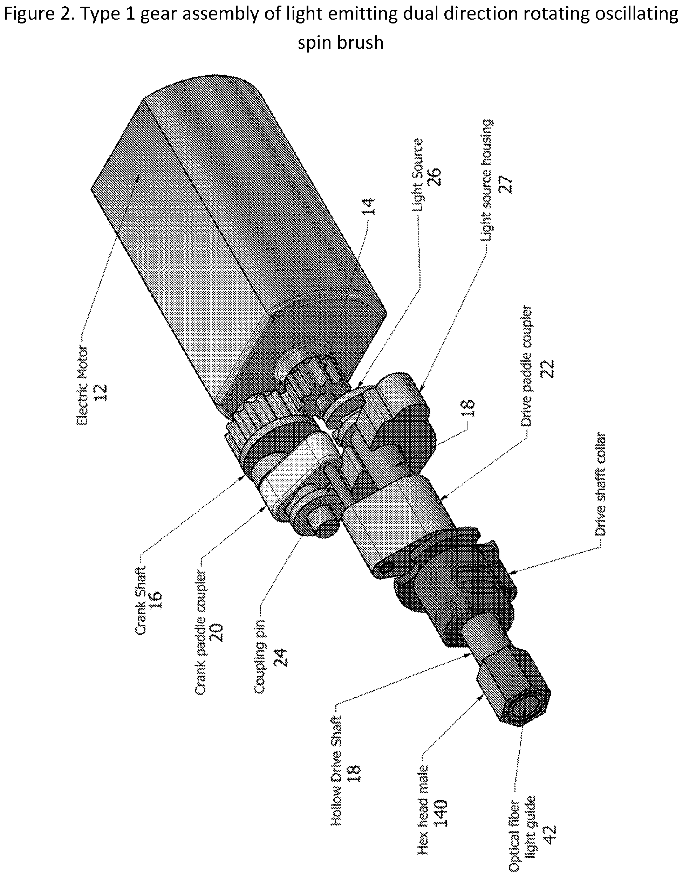

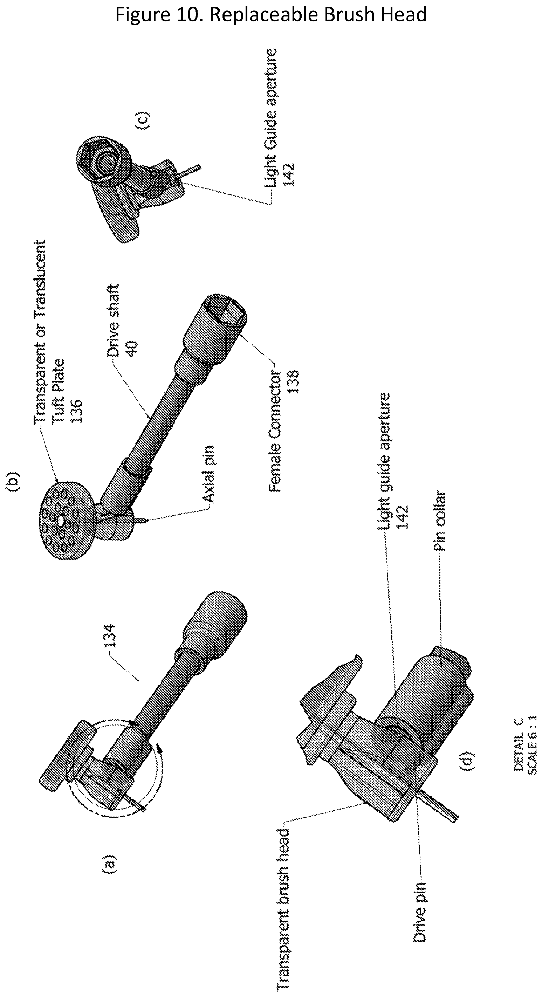

Different types of electric "spin" toothbrush designs typically use a rotating DC drive motor and a variety of different gear mechanisms to rotate the brush head whereas a sonic motor typically uses a specialized AC drive motor. The toothbrush includes an electrical power source such as an AC connection or DC battery; such sources are well known and need not be detailed herein. Typical designs can be classified as follows:
Type 1. A dual direction rotating oscillating spin brush typically uses a DC electric motor with a rotating gear assembly to drive a secondary crank shaft which in turn creates a side-to-side oscillating motion on the primary drive shaft (see Figure 2). A spin brush typically has a rotating brush head that oscillates with an axis perpendicular to the shaft of a toothbrush, the oscillation amplitude is about 30 degrees, corresponding to about 2 mm displacement on the outer rim of the head and the frequency is generally from around 20 Hz to 120 Hz. Such a brush head may be replaceable as seen in figure 10.

In Figure 1(b) and 2, the spur gear 14 of the electric motor 12 rotates in one direction and drives the crank shaft which creates a 2-way oscillating rotation of the drive shaft 18 via the crank paddle 20, drive paddle 22, and coupling pin 24. A light source 26 such as a PCB mounted LED or laser diode, which is stationary with respect to the toothbrush housing, can placed adjacent to or inside the gear assembly with the light source 26 focused along the same axis as a light guide 42 contained within a hollow drive shaft 18. The light source is connected to the electronics of the toothbrush and a power source but preferably does not touch the moving mechanical parts or the light guide. As seen in Figure 1(b), the drive shaft contains or is comprised of an optical light guide 28 made from at least two types of optical grade plastic with the refractive index of the inner core layer being greater than the refractive index of the outer layer (not shown in Figure 2 or 1(b)). More layers can be added to concentrate the light towards the center although two layers provides acceptable transmission efficiency. An outer layer of optical plastic forming the exterior of the light guide enables light to be contained through total internal reflection even when the light guide touches an external object such as the hollow drive shaft.

Type 2. A unidirectional rotating spin brush is a much simpler design that type 1 and typically uses bevel gears in the brush head to translate rotation motion at about a 90-degree angle to the drive shaft. A type 2 toothbrush design can be made light emitting in much the same way as a type 1 design. The bevel gear closest to the tuft plate in the head of the toothbrush is made from transparent optical plastic so as to convey the maximum amount light energy transmitted through the drive shaft onto the reflective housing beneath the transparent or translucent tuft plate and transparent toothbrush bristles. A simple spur gear system conveys rotational energy from the DC drive motor to the drive shaft while permitting light injection to occur at the proximal end of the drive shaft in the same manner as described for type 1. A person of ordinary skill will be easily able to adapt the type 1 design to a type 2 design light emitting toothbrush.

Type 3. Some dual direction rotating oscillating spin brushes use a gear assembly a such as bevel or crown gears connected to a crank shaft to create forward and backwards motion on the drive shaft instead of a side-to-side rotation. This arrangement can be used to drive two brush heads instead of just one.

The type 3 design approach does not readily lend itself to direct injection of LED light into the drive shaft since the distance between a stationary light source and the optical light guide is not constant, compromising beam intensity. For simplicity, type 1 or 2 design is preferred so the optically conductive drive shaft is maintained at a constant distance from the light source. However, design type 3 is commonly used in some spin brush designs, particularly those with dual action heads such as a combination of spin head and second head with a forward and backwards motion parallel to the drive shaft. In this scenario, light injection can be accomplished by extending the optical connection through a mirror tube. A mirror tube 28 is a hollow cylinder that has a reflective interior surface and can be created inexpensively using techniques such as electroplating, mirror flashing, aluminum flashing, or vacuum deposition.

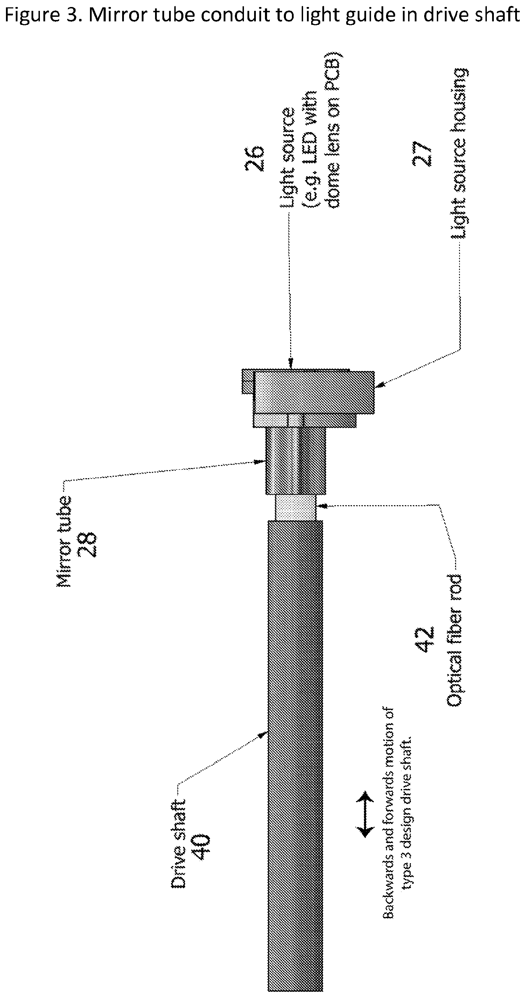

A stationary light source 26 such as an LED or laser diode is placed a one end of the mirror tube 28 and the drive shaft 40 and the light guide 42 it contains are placed on same axis as the mirror tube. Alternatively, a light source 26 and light concentrator assembly can be positioned to inject into the end of the mirror tube opposite the fiber optic guide as shown in figure 3.

When a mirror tube is used, preferably the optical fiber extends beyond the end of the drive shaft, into the mirror tube but does not touch the mirror tube. As the mechanical oscillation occurs, the light is concentrated into the aperture of the optical fiber regardless of its position relative to the light source as shown in figure 3. Preferably the mirror tube 28 should have an inner diameter slightly larger than the diameter of the optical fiber 42, but less than 500 microns larger. Preferably, the mirror tube system should employ an optical fiber rod with a rigid core, with a Young's modulus above 0.5 GPa, to avoid excessive vibration and touching inside the mirror tube. Transparent polycarbonate is a suitable material for the inner core of the optical fiber with a refractive index of about 1.585. The outer cladding having a refractive index lower than the inner core (such as acrylic or PMMA with a refractive index of about 1.49) improves transmission properties and reduces the minimum angle of incidence. With type 3 design a rigid optical light guide rod is preferred to avoid touching the interior reflective surface of the mirror tube.

### Type 4 Design -Light Emitting Oscillating Sonic Toothbrush

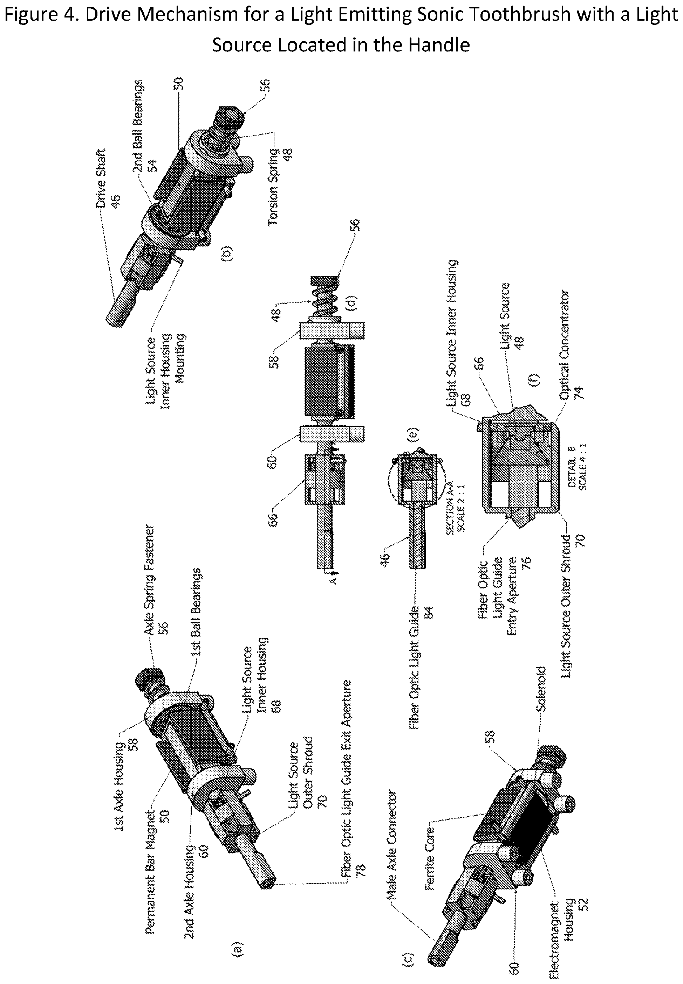

The design principles for injecting light into the hollow drive shaft 46 of a sonic brush, from a light source 48 located in the handle of the toothbrush are illustrated in the figure 4.

The "sonic toothbrush" oscillates the brush head (not shown in figure 4) on an axis that is roughly parallel to the shaft 46 of the toothbrush using a torsion spring 48 and a permanent magnet 50 connected to the drive shaft energized by an electromagnet 52 which energizes the permanent magnet 50 at a mechanical resonance frequency.

The principal of using a drive shaft containing an optical light guide disclosed previously can also be applied to a "sonic" style toothbrush.

A sonic toothbrush typically has an oscillating head which vibrates along an axis that is parallel to the shaft of a toothbrush, typically has an oscillation frequency of at least 250 Hz and a vibration amplitude of less than 5 degrees corresponding to a displacement of less than 1mm.

The principles of mechanical operation of a Type 4 sonic toothbrush that has no therapeutic light are well known and in wide commercial use. However, for context of how light injection is accomplished in this assembly, it is helpful to provide a summary as depicted in figure 4. A sonic toothbrush typically uses a torsion spring 48 or torsion bar with an inherent resonant frequency of at least 250 Hz which is mechanically connected to a housing that is in turn mechanically connected to the toothbrush handle outer chassis. In the depicted assembly, the drive shaft 46 is suspended via ball bearings 54 allowing free roll rotation along the axis roughly parallel to the shaft of the toothbrush. The axle spring fastener 56, 1st and 2nd axle housings 58, 60 are mounted to the outer handle chassis of the toothbrush handle.

In some designs, it is possible to replace or augment the torsion spring with an assembly of spring plates to create torsional lateral, or shear vibration. Nevertheless, the same principles of light injection apply to these types of designs.

The mechanical energy of a sonic toothbrush is typically derived from the agitation of a permanent magnet attached to the drive axle via an electromagnet assembly containing a solenoid with a ferrite core at least partially contained within the solenoid. The electronics of the toothbrush transmit electrical pulses through the solenoid at a frequency at an integer multiple of the resonant frequency of the torsion spring. This is accomplished with an oscillator, timer, amplification and/or feedback circuit. The resultant alternating rotational oscillation of the permanent magnet drives the axle and creates a resonance to maximize the amplitude within the axle assembly connected to the torsion spring. Note that the terms axle and drive axle in this context are synonymous with the drive shaft.

### Light Injection into the Light Guide Comprising the Drive Shaft

The principle challenge with injecting light in the sonic toothbrush assembly is that the light source is typically powered through electronics which do not withstand extensive vibration or shear stresses. Therefore, the light source should preferably be stationary, and light injected into the light guide of the drive shaft without any direct physical contact between the electronics, light source, light concentrator assembly and the moving parts of the drive axle or drive shaft. Furthermore, since the electronics may not contact the moving parts, the beam optics are preferably optimized to minimize losses of light energy.

This is addressed with a light injection assembly that projects light from a light source into the light guide component of the rotating drive shaft at a location that is closer to the distal end of the toothbrush than the permanent magnet and electromagnet assembly. In one embodiment, the light injection assembly 66 is contained in a stationary inner housing 68 that is contained within an outer housing (shroud) 70 that is part of and physically connected to the rotating axle 46. The inner housing 68 and the outer shroud 70 do not touch. The electronics required to power the light source can be attached to or contained within the mounting pillars of the inner housing 68 and preferably is situated in a manner where there is no physical contact with the moving drive shaft 46 or the moving outer shroud 70.

The light source may be an LED or laser diode. A light source concentrator 74 may be used to concentrate the light into the entry aperture of the fiber optic light guide 76. The concentrator may be a dome lens or parabolic concentrator, a mirror tube or other non-imaging optic, or similar in design to the Carclo Fiber Optic Coupling Part Number 10356. A white reflector tunnel will also work but be more lossy than a specialized optic. To minimize losses, preferably, at least 50% of the light energy will have an angle of incidence appropriate for total internal reflection within the fiber optic light guide, typically at less than about 20 degrees. The aperture of the fiber optic preferably is positioned to minimize the spot size of the optic so as to provide for maximum energy capture by the light guide. With an LED light source, a dome or ball lens is the most economical optic. When coupling light from a LED into a fiber, the choice of ball lens is dependent on the Numerical Aperture (NA) of the fiber and the LED's spot diameter. The LED's spot diameter is used to determine the NA of the ball lens. Having the NA of the ball lens less than or equal to the NA of the fiber aids in maximizing the coupling of light into the fiber. Another embodiment combines a mirror tube with a dome lens having a radial distribution of 30 degrees or less to concentrate the light into the aperture of the fiber optic as depicted in figure 3.

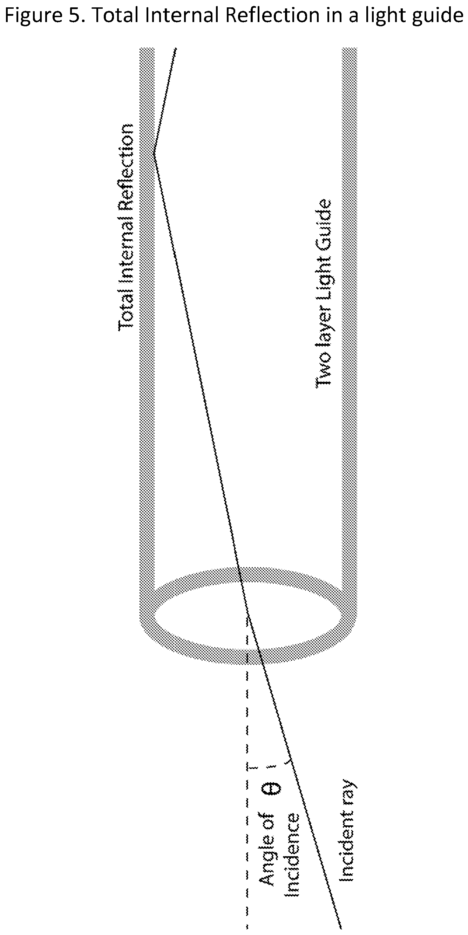

Based on Snell's law, the largest possible angle of incidence which still results in total internal reflection is called the critical angle; in this case the refracted ray travels along the boundary between the two media. As explained previously, the maximum angle of incidence is a function of the refractive indexes of the inner and outer layers of the fiber optic, as depicted in figure 5. If the fiber optic guide has at least two layers for optimal light transmission, losses where the optical fiber is in contact with the inner perimeter of the drive shaft are reduced.

The proximal light guide exit aperture 78 is contained in the male axle connector at the distal end of the handle. The male axle connector should have a minimum diameter that equals or exceeds the diameter of the optical light guide.

### The Detachable Head of a Light Emitting Sonic Toothbrush

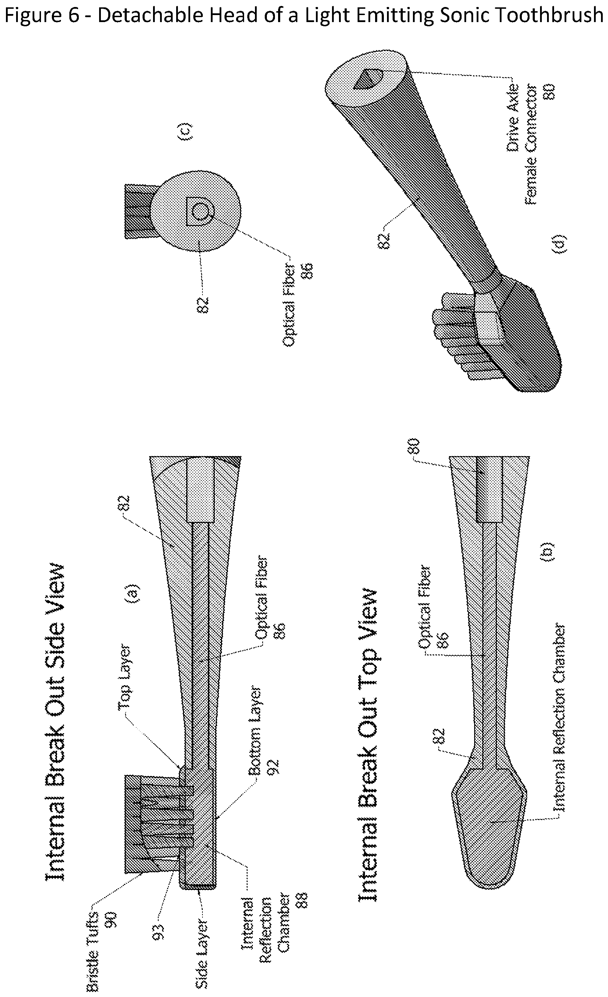

A corresponding female connector 80 is contained at the base of the detachable sonic toothbrush head 82 as depicted in the figure 6. The light guide 84 in the drive axle 46 of the handle is connected to the light guide 86 in the detachable head 82 of the toothbrush, where the male and female connectors also function as an optic ferrule for the optical light guide. The female connector 80 also enables the transfer of torsional motion from the drive shaft 46 located in the handle to the entire replaceable brush head 82.

Stated another way, a mating connector in the proximal portion of the drive shaft mechanically connects to a mating connector in the distal replaceable brush head and serves as an optical ferrule for the light guide. The inner surfaces of both mating connectors should surround their respective portions of the outer surface of the light guide.

The fiber optic guide is contained within the neck of the replaceable brush head and is preferably connected to an internal refection chamber 88 located beneath the bristle tufts 90. The reflection chamber 88 may be part of the same mold as the optical light guide or connected through an over molding process. The internal reflection chamber may be comprised of an inner and outer layer of optical plastic similar to the light guide but preferably comprised of a single grade of optical plastic to nullify the total internal reflection phenomenon and create instead diffuse or Lambertian reflectance. A texture may be also applied to the bottom layer 92 to create a diffusely reflecting surface.

The bristles of the tufts 90 are preferably transparent and are embedded in the toothbrush head, which is comprised of at least two types of plastic. The side and bottom layers are made from a highly reflective white plastic or alternatively have a metallic finish. Preferably the side and bottom layers have a reflectivity index above 80% for light at about 430nm. The central layer is comprised of a transparent optical plastic that permits light from the optical light guide to cascade around the reflection chamber 88 beneath the bristles of the toothbrush before exiting through the tuft plate 93. The topmost layer of the tuft plate is transparent or partially transparent (i.e. translucent) diffusion grade optical plastic so that a portion of the light is reflected back into the reflection chamber. In this assembly, the light can be more evenly distributed across the entire surface of the tuft plate instead of being projected into concentrated areas of the tuft plate. The bristle tufts 90 are mounted in tuft holes that span the top-most and central layers.

Instead of using a translucent material, the topmost layer of the tuft plate 93 can have a frosted surface to provide a translucency through texturing of the exit surface. The Society of the Plastics Industry (SPI) sets standards for the plastics industry and defines surface textures according to an A through D scale. The de facto industry standard for toothbrushes is a high gloss type "A" texture finish. However, we prefer the surface texture of the tuft plate have a "B", "C" or "D" texture to promote light diffusion and increased hydrophilicity. The "B", "C", "D" texture can be on the underside, topside or both.

Preferably, the width and depth of the reflection chamber 88 should equal or exceed the diameter of the fiber optic guide 86 and preferably, the perimeter of the reflection chamber should fully encompass the area encompassing the bristle tufts 90 when viewed from an axis perpendicular to the tuft plate, as in Figure 6(a).

### Considerations in Light Guide Design

A flexible type of fiber optic can be used with type 1, 2 and 4 electric toothbrush designs such as the 3mm unjacketed optical fiber distributed by Edmund optics (stock #53-833). The type 3 design calls for a rigid light pipe. Alternatively, the inner core can be made from optical plastic and injection molded first and then then the outer cladding can be over molded on the inner core after the inner core is inserted into the drive shaft. For all designs, preferably, the drive shaft is less than 5 mm in diameter, the inner light guide is less than 4 mm in diameter and the width of outer optical cladding is 1.0 mm or less. For all designs, preferably, the inner core of the light guide has a refractive index greater than 1.5 and the outer optical cladding has a refractive index less than 1.5.

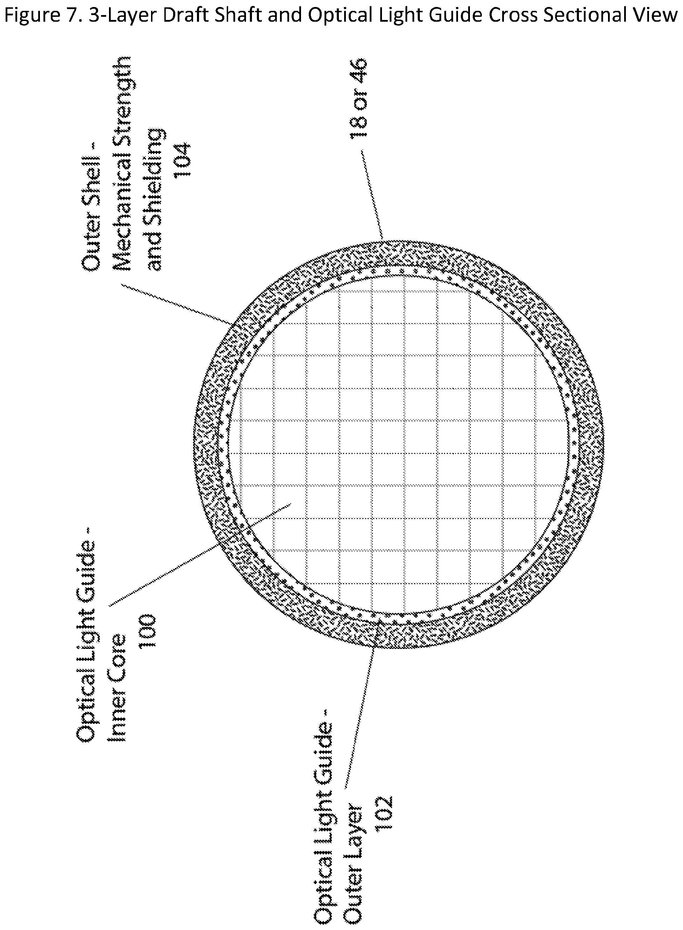

It is also possible to manufacture the drive shaft as one contiguous part with at least three layers (see figure 7). This drive shaft configuration can be used in all types of power toothbrush designs. The innermost layer forms the inner core 100 of the optical light guide and the surrounding layer 102 forms the outer reflective layer of the optical light guide. Preferably, both the inner and outer optical layers are comprised of transparent optical polymers with the inner core 100 having a refractive index greater than the optical cladding layer 102 to facilitate total internal reflection (TIR). The outer shell 104 provides most of mechanical strength of the drive shaft and shields the inner optical guide layers from mechanical wear and damage. The outer shell 104 may be made of a metal alloy, high strength polymer, or opaque material suitable for high torque applications preferably with a Young's modulus of at least 0.5 GPa. However, the outer shell, which is preferably opaque, must not obscure the apertures of the light guide.

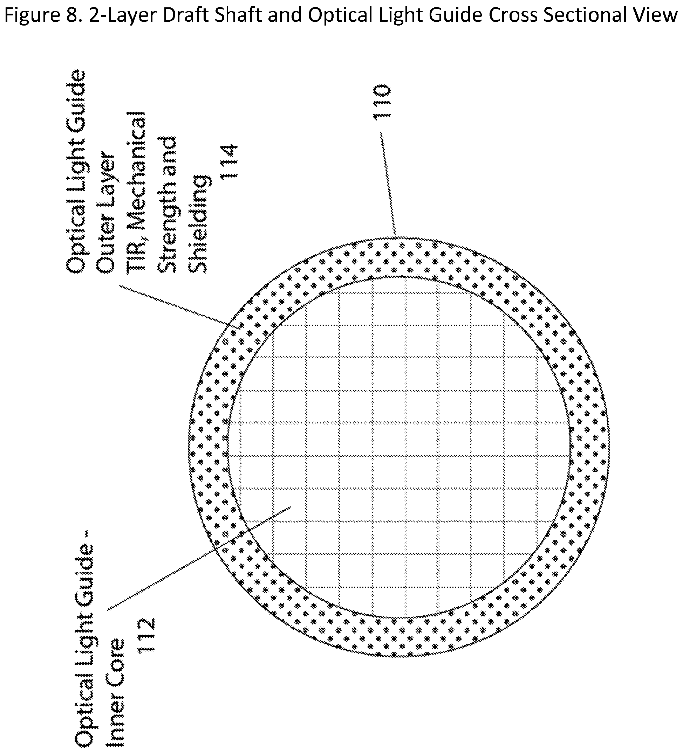

It is also possible to construct the entire drive shaft entirely from optical plastic so that the entire drive shaft functions as a light guide. For instance, the drive shaft may be entirely constructed from two or more layers of optical plastic with a transparent outer core as shown in the figure 8. Though this is possible, it is not ideal as the drive shaft may be more vulnerable to breakage, wear and scratching. Furthermore, the optical properties and transmission efficiency may suffer in areas with mechanical contacts and attachments such as mechanical collars, connectors, drive paddle couplers, bushings and so forth. However, there may be manufacturing cost advantages to this approach. In this scenario the mechanical torque strength comes from the optical fiber alone. Therefore, the optical fiber of the inner 112 core and/or outer core 114 should optical fiber material with a Young's modulus of at least 0.5 GPa to avoid warping and mechanical breakage. The thickness of the outer optical layer preferably is increased to provide additional protection, preferably to at least 300 microns.

Regardless of the approach there must always be at least two layers of optical material in the drive shaft where the outer optical layers have a refractive index lower than the inner core to facilitate total internal reflection.

### Replaceable Brush Head

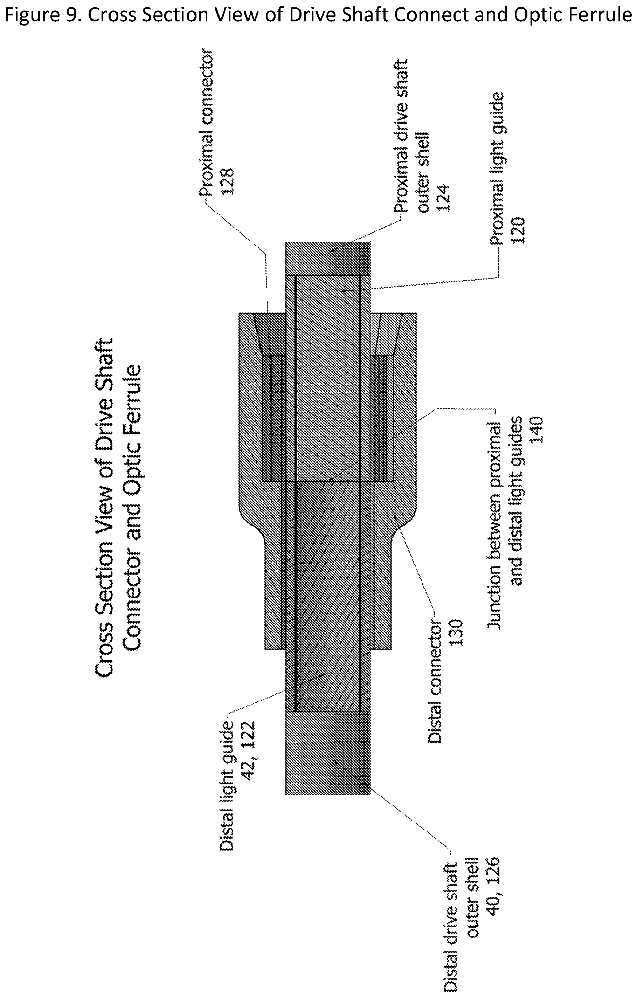

An electric toothbrush typically has a replaceable brush head or neck. In this arrangement, the light must travel through the light guide inside the proximal drive shaft of the handle to the distal drive shaft of the replaceable neck or head. Typically, some loss of light occurs at the junction of the proximal and distal light guides. We have developed a connection which enables a brush head to be replaced by using the mating connector attached to the drive shaft to also serve as a fiber optic ferrule, as shown in Figure 9. By connecting the connecting the proximal and distal ends of optical light guide using the same connector as the drive shaft, we can protect against damage and wear, and correctly align the apertures of the light guides 120, 122 to each other. Unlike conventional electric toothbrushes, in this arrangement the proximal 124 and distal 126 drive shafts contain a fiber optic / light guide. The mating connector should preferably have an internal diameter at least as large or preferably larger than the drive shaft. Furthermore, at any point along the rim of the male 128 and female 130 mating connectors, the inside surface of the connector should preferably surround the perimeter of their respective portions of the light guide. Thus, the perimeter of the light guide is shielded by the drive shaft and the sides of the light guide are not exposed. Only the exit apertures of the light guides at their junction 140 are exposed to the exterior environment and only when the replaceable brush head is removed.

Stated another way, a mating connector in the proximal portion of the drive shaft 128 connects to a mating connector 130 in the distal portion of the drive shaft 126 or the distal replaceable brush head and also serves as an optical ferrule for the light guide, the inner perimeter of both mating connectors should encompass the outer perimeter of the light guide.

We have found that a male and female hex head style connector functions adequately for this purpose, though many types of polygon shapes or asymmetric shapes can be used to provide a mechanical connection. It is understood that the locations of the male and female connectors can be reversed but having the male connector in the proximal position is preferred. A bayonet style mounting may be used in the case when the drive shaft moves parallel to the shaft of the toothbrush as is the case with the type 3 design, though this is not necessary if the drive shaft rotates along the axis parallel to the shaft of the toothbrush as is the case with type 1, 2 and 4 designs.

It is beneficial to create a small amount of opposing force between the fiber optic guide in the handle and the fiber optic guide in the replaceable head/neck assembly so that the two fiber optic guides are flush or in contact to minimize light loss. This can be accomplished with magnets, a bayonet connection or a snap fit. Preferably, the fiber optic in the handle should have a scratch resistant surface at the connection point to avoid damage to the handle optical aperture. One method is to add a thin layer of hardened glass at the terminus of the fiber optic in the handle. Preferably, the scratch resistant surface should have shore hardness D (also called Durometer Hardness Test) rating higher than 10.

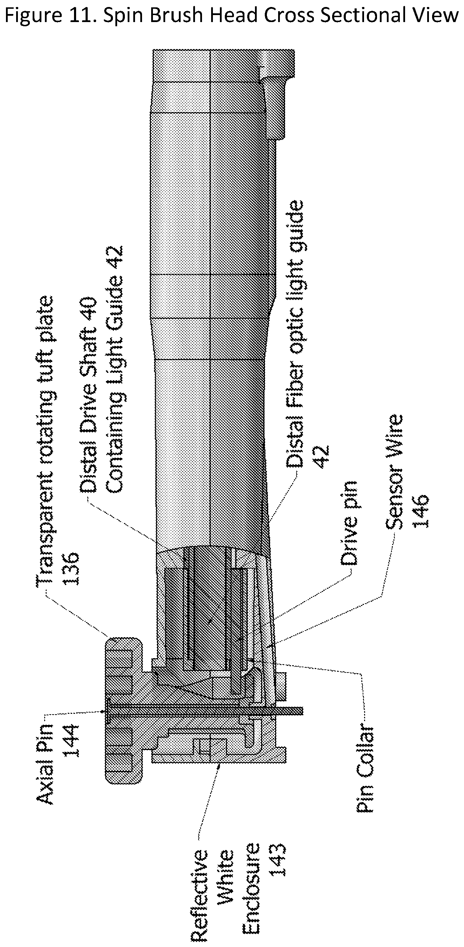

The spin brush head 134 depicted in Figures 10 and 11 rotates a transparent brush head 136 with transparent bristles (not shown). Preferably, the plastic used in the brush head should permit at least 50% and preferably at least 80% of the light energy exiting the light guide to emanate from its exterior surface. The depicted female connector 138 connects to the hex head male connector 140 shown in figure 2.

Preferably the light guide aperture 142 adjacent to the brush head is located beneath the surface of the tuft plate 136 and may have a flat terminus or may be shaped to guide the light upwards towards the exterior face of the tuft plate head. Since the fiberoptic is rotating, its motion may be used to clean the aperture by wiping debris from its face with a non-abrasive counter positioned cleaning arm.

As shown in figure 11, the enclosure 143 of the replaceable head should preferably be made of a highly reflective white plastic with a reflectance index of at least 80%, so that the maximum amount light is reflected and redirected to exit through the transparent or translucent brush head.

### Electronic Sensing of Brush Head in the Mouth

The inventors have previously shown in WO 2019/139256, the entire disclosure of which is incorporated herein by reference, how a current loop can be used to sense the moment when the brush head is inserted into the mouth or removed from the mouth to turn off the light or trigger a ramp-up / ramp-down sequence. A sensor can be implemented in the replaceable head of the toothbrush using the axial pin 144 of the tuft plate as an electrode. The axial pin can be stationary, and a wire 146 connected to it to form one electrode in the head. The axial pin is exposed through an exterior surface on the transparent surface of the brush head. A second electrode is placed within the interior of the handle. When the handle is grasped and the wetted head of the toothbrush makes contact with the mouth, a bioelectrical circuit is formed though the body of the end-user between the mouth and hand grasping the handle of the toothbrush which can be used to detect a change in capacitance or impedance between the first electrode in the head (i.e. pin 144) and the second electrode in the handle (proximal) using either a current loop and/or capacitive sensing method.

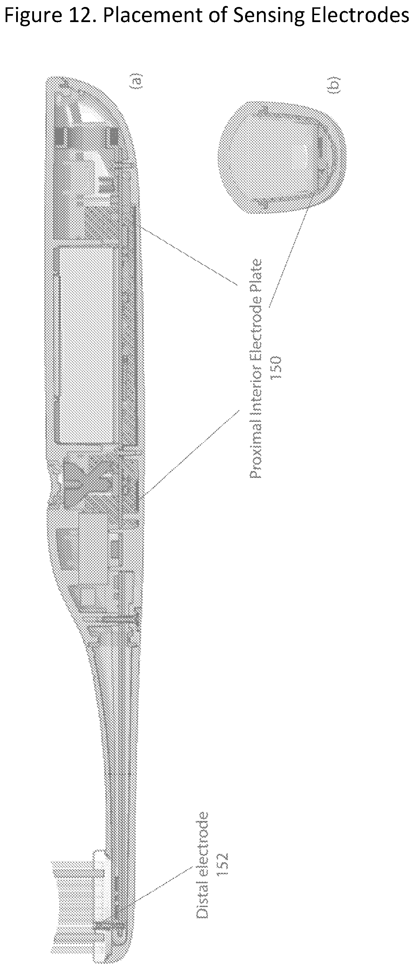

As depicted in figure 12, when implemented using a capacitive sensing method, preferably the handle electrode 150 will be shaped as a shield contoured and positioned no more than 10 mm below the surface of the handle housing and preferably less than 3mm as depicted in Figure 12. Using a microcontroller or dedicated capacitive sensing circuit it is possible to measure the mutual capacitance between the proximal 150 and distal 152 electrodes to facilitate effective contact sensing. These readings can be monitored by an algorithm such as described later in this disclosure.

If the axial pin 144 is stationary, a small seam placed between the axial pin and the tuft plate allows water to flow easily into the neck of the toothbrush. A preferred embodiment uses an axial pin molded into the transparent plastic of the rotating toothbrush head, with the head of the pin pressing against a second, stationary spring pin. In this arrangement the brush head is water-tight, and an electrical connection is formed to the surface of the toothbrush head and wet bristles of the toothbrush, via the capillary action of water.

The sensor pin in the head of the toothbrush may also be a crank pin, connected to a crank arm or any pin that transfers mechanical force to rotate the brush head, as long as it is exposed to an exterior surface.

A wire 146 can be used to connect the electrode in the head of the toothbrush to the electronics in the handle of the toothbrush that control the light and other brush functions. The use of electrical interconnect components such as Mill-max Spring Pin 0921-1-15-20-75-14-11-0 and Mill-max Connector Pin 4268-0-00-15-00-00-33-0 may be used to establish an electrical connection between the electrode located in the replaceable head of the toothbrush and the electronics located in the handle.

An alternative to using a wire is to make the electrical connection through the axial drive shaft itself if the drive shaft is made from metal, conductive plastic or has an electroplated surface. This can be done using a slip ring or ball bearing coated in conductive grease located in the handle and a reciprocal arrangement in the replaceable head. Other options include metal bristles, carbon fibers, and carbon brushes which have become the popular choices for shaft grounding. These sliding electrical contacts are designed to carry electric charges across the sliding interface between the contact surfaces.

One advantage of placing the proximal electrode inside the handle is the mitigation of the "toothpaste short" problem. This occurs when a mixture of toothpaste and water runs down the neck of the toothbrush and creates a closed circuit between the electrode in the handle and the electrode in the head of the toothbrush, creating a false positive condition. This condition can be detected and filtered using an electrode located in the interior of the handle with no exposed surfaces, as the latter design relies or a capacitive current loop rather than a resistive current loop and is not unduly influenced by these type of short circuiting problems.

It is understood that any of the innovations described in design types 1, 2, 3 and 4 may be applied to any of the other design types and are not restricted to one design type.

### Brush Head Electrode

A toothbrush with a current loop sensor or capacitance sensor preferably has an externally accessible electrode located within the plurality of the toothbrush bristles, to form a reliable electrical connection between the electrode and the body of the user. The conductive medium that facilitates the electrical connection is water and saliva. When the bristles are wet, water is propagated along the length of the tuft of toothbrush bristles through capillary action and water absorption if the bristles are made from nylon.

Typically, toothbrushes are made from a hydrophobic material with a smooth surface to facilitate water shedding. However, for a reliable electrical connection to be formed from an electrode located near a tuft of bristles, the tuft plate plastic used preferably is hydrophilic. Manufacturers of toothbrush heads typically require a minimum separation distance between bristle tuft holes of at least 0.75 mm. An exterior electrode (e.g. such as pin, wire or vein of conductive plastic), located near a tuft of bristles makes an electrical connection through a thin layer of water residing on the surface of the toothbrush head surrounding the tuft of bristles (see figure 2).

Therefore, the plastic used to mount the tufts preferably is hydrophilic and /or hygroscopic (to improve conductivity) such that the surface stays wet, and the water does not bead up. Alternatively, a material can be modified to increase hydrophilicity by adding a coating or by processing to modify surface properties by adding texture, frosting or water channels that promote capillary action across the surface of the tuft plate thus increasing hydrophilicity. Plastics that attract water to their surface are said to be hydrophilic. Hydrophilic polymers include nylon, ABS, polycarbonate, cellulose, and poly-methyl-methacrylate, PET, PBT. Other polymers, such as polyethylene and polystyrene, do not normally absorb much moisture, but are able to carry significant moisture on their surface when exposed to liquid water.

Hydrophilicity is often measured through contact angles because the simplest experiment to determine the surface properties of a polymer is the water contact angle measurement. Low contact angles below 90 degrees for water are associated with hydrophilicity. The hydrophilicity of a plastic can be the result of its inherent properties or can be engineered using various treatments such as molded textures, plasma treatment, UV irradiation, graft polymerization and trans-esterification with liquids such as ethylene glycol and glycerol, after the molding process is completed.

For a good electrical connection to be made between the electrical contact and the mouth, via the action of water, saliva and toothpaste, preferably, the plastic used to mount the tufts of toothbrush bristles preferably is hydrophilic with a water contact angle below 90 degrees.

Plastics that absorb water are said to be hygroscopic. Hygroscopicity is often measured by the amount of water absorbed as a percentage of total weight during total immersion for a period of 24 hours. Preferably the type of plastic used to mount the tufts of toothbrush bristles preferably is hygroscopic with a water absorption percentage of at least 0.01% and preferably at least 0.1%.

If the plastic is sufficiently hygroscopic the plastic itself becomes more conductive when wet. This property is exploited in certain humidity sensors that use hygroscopic materials whose electrical resistance varies in a repeatable fashion when exposed to varying air humidity. For a sufficiently hygroscopic plastic, the electrode may be placed below the exterior surface of the toothbrush head because the entire mass of wet hygroscopic plastic in the toothbrush head has a degree of conductivity and thus functions as a single electrode.

Conversely, it is desirable to avoid false electrical contact signals when the brush touches the human body with any toothbrush part other than the wet bristles of the toothbrush. For this reason, the plastic surrounding the area where the bristles are mounted preferably is hydrophobic with a contact angle greater than 90 degrees. For the same reason, it should also not be hygroscopic and should have a water absorption percentage below 0.1%.

Furthermore, the plastic used for mounting of the bristle tufts should preferably be either transparent or partially translucent so that light can readily emit through the brush head. This is commonly measured through the total transmittance, which is the ratio of transmitted light to the incident light. It is possible to measure the degree of light transmittance using ASTM D-1003 (Standard Test Method for Haze and Luminous Transmittance of Transparent Plastics).

It may be desirable to use a translucent as opposed to a transparent material as diffusion of the light will disperse light over a wider surface area, which may provide better therapeutic benefits and minimize the radiance of the light. Such dispersion would improve photobiological safety. For a wavelength of 450 nm, the ideal type of plastic used should have a total transmittance of at least 20% for a 1 mm thick sheet and preferably above 50% for a 1mm thick sheet. Alternatively, a transparent material with a total transmittance of at least 50% for a 1mm thick sheet can be used with a frosted surface to create a similar diffusion effect.

Another desirable attribute of the optical plastic is its transmissivity at different wavelengths. Generally, it is desirable to have high transmittance (above 50%) at wavelengths above about 410nm but low transmittance (below 50%) at wavelengths below 400nm so that UV light is filtered.

However, this is especially true for the replaceable portion of the toothbrush head where the yellowing and degradation that may result from UV blocking does not impair the product because that portion is replaced every 3 months or so.

Furthermore, any plastic used in a toothbrush head must be FDA approved for intraoral consumer applications.

### Staple Connection and Conductive Cup

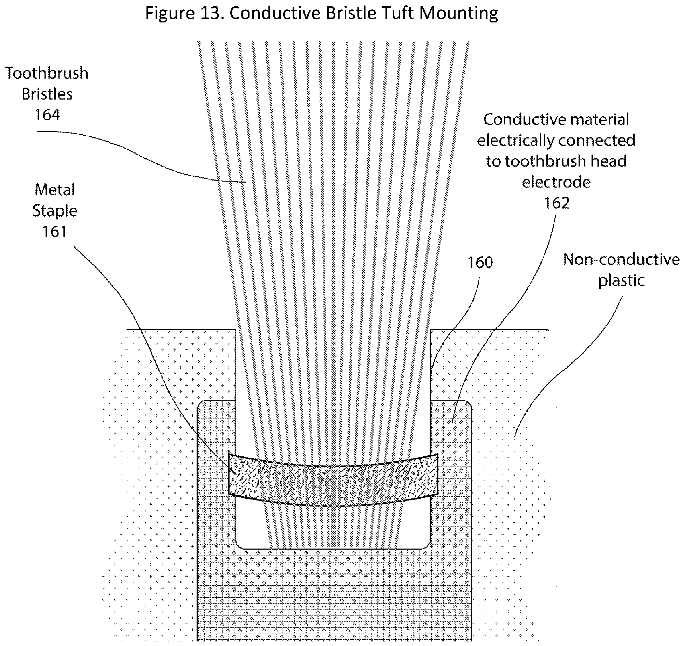

Another option for implementing an electrode in the head of the toothbrush as seen in figure 13 involves lining one or more tuft holes 160 where bristle tufts are mounted with a conductive material such as metal or conductive plastic162. Toothbrush bristle tufts 164 are affixed using metal staples 161 which hold the bristles in place. Making the lining of the tuft hole conductive enables the wet bristles to conduct electricity below the surface of tuft plate. A pin or wire (not shown) physically connects to the lining of the hole so that the electrode is electrically connected with interior electronics of the toothbrush.

### Light Alarm State Management

The user experience of the light emitting toothbrush should be intuitive. One important aspect of the user experience is for the precursors of light activation being predictable. When the light activation sensor is operational, it may trigger activation of the light when the sensor detects an in-the-mouth condition. However, the user preferably is alerted that the light is about to be operational even if the light is not activated. We have previously shown in WO2019/139256 how a 1-phase alarm system can be used to alert the user of the power status of the light though a one phase activation state transition process. However, it may also be desirable to alert the user of the pending readiness of the light to be switched on even if it not actually switched on. This is a 2-phase activation process which may be useful under a variety of circumstances, for example, the light activation sensor is placed in a ready state when preceded by:
- the movement of toothbrush is detected through an accelerometer
- the toothbrush is removed from the charging cradle
- the placement of the toothbrush handle in the hand is detected using an electronic sensor such a capacitance sensor.
- the toothbrush motor is activated through an on-off switch or multistate toggle switch.

The light activation sensor (i.e. the sensor that receives a datum that is used to trigger light activation) itself can take many forms, such as a capacitance sensor which detects current flowing through the body of the end user when the brush head or bristles are in contact with the mouth and the handle is in contact with the hand, a current signal loop which detects current flowing from the brush handle through the body of the user to the brush head, a passive thermal infrared that detects the warmth of the human mouth; a photoelectric sensor that detects reflected IR light emitted and absorbed by the sensor itself; a light sensor that is triggered by darkness inside the mouth; a light sensor that detects the reflection of light from a second light source on the brush when the brush is activated; an ultrasonic and active sonar sensors that uses echo location to detect the confines of the mouth; a magnetic detector that detects the proximity of metals such as the hemoglobin present in blood; a pressure sensor under the brush head that detects movement and pressure of the brush head being pressed against the teeth; a pressure sensor in the neck that detects torque and tension in the neck of the brush due to brushing action; a moisture sensor to detect a highly moist environment such as the mouth; and a combination of two or more of these sensor types.

Regardless of the type of sensor, it is unlikely a sensor system can be made 100% reliable. For this reason, it is desirable to alert the user not just of the power status of the light but also the readiness status of the light activation sensor. This alert can occur through a 2-phase alarm system. The alarm may be one of several mechanism including:
- An audible sound
- A flashing light or low intensity which may be the therapeutic light source or a separate light source
- A glow light which may be the therapeutic light source or a separate secondary light source, preferably at less than 20% of the radiant intensity of the light source at its maximum operating intensity.
- Activation of the motor in a spin brush or sonic style toothbrush
- Pressing an on/off switch

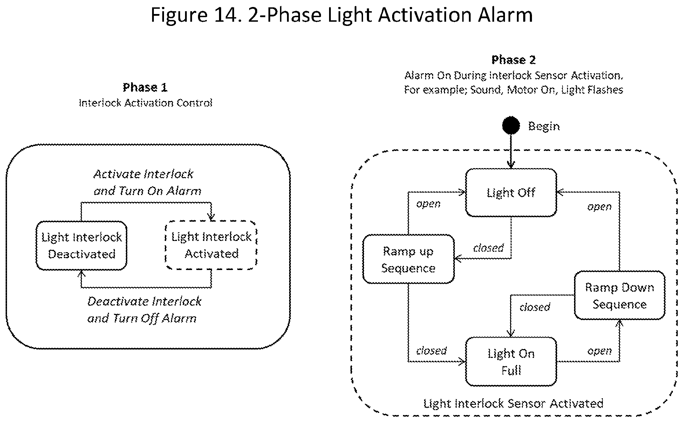

A diagram of the 2-phase activation and alert system is depicted in the state transition diagram in Figure 14.

This system can be comprised of two alarms, one which is activated by Phase 1 activation of an interlock and in phase 2 activated based on the power status of the light. Alternatively, there may be only 1 alarm triggered by phase 1 activation with a secondary phase 2 mechanism to turn on the light when a sensor detects the toothbrush is placed in the mouth.

In our prior patent application WO 2019/139256, the inventors have disclosed a method of ramping the blue and/or red light over a period of at least 0.5 seconds and preferably about 5 seconds to provide ample time for the user's eyes to react to the activation of the light.

The light activation can also use a sequence of colors because red light is known to create lower stress on the eyes than blue or violet light. It this scenario, activation of the red-light ramp can precede the blue light due to its inherently lower eye discomfort.

Regardless of the control system, preferably the therapeutic blue light should have a wavelength of between 400 nm and 500 nm and an optional second therapeutic red or I/R light, with a wavelength of between 600 nm and 1200 nm. The light(s) may be located inside the handle, neck or head of the toothbrush but the light should preferably emanate from the area beneath, between and/or adjacent to the toothbrush bristle tufts.

### Using a Motion Sensor and Contact Sensor in Combination to Activate the Light

Another method of preventing incorrect activation of the light is to combine two or more sensors and to use an algorithm that combines the input from two or more sensors to establish a tiered activation system based on confidence levels that the toothbrush has indeed been placed in the mouth and not one of the alternate conditions that could be triggered by a contact sensor alone. The goal of a combination system is to avoid false positive activation of the light through inadvertent conditions such as touching the wet brush head to the skin of the opposite hand or holding the toothbrush in the shower.

Some publications refer to a combination of a contact sensor, such as a pressure sensor, and a movement sensor such as an accelerometer or gyroscope, to monitor and report toothbrushing compliance. Typically, these approaches use computationally intensive statistical analysis techniques to compare the motion and contact readings with that of known quadrants of the mouth to determine whether a user has adequately brushed all areas of the mouth. However, these techniques do not work for the control of a light where sub-second responsiveness is essential. These published techniques require extensive computation and sensor data history before the algorithm can make decisions, which take too much time on a computing device contained within the toothbrush such as a microcontroller which have limited processing power and storage capacity. Use of such methods would introduce unacceptable delays in the control of a light, which preferably is responsive to within less than 500ms.

The inventors have developed an alternate approach which uses analysis of signals from a movement sensor combined with a contact sensor using software which has been trained or programmed to classify when the toothbrush head is inside or outside of the mouth or alternatively whether the teeth are being brushed or not brushed. The resulting trained algorithm can generate an executable c-code function that is loaded onto the control circuitry of the toothbrush microcontroller.

The terms "in-the mouth" and "brushing" may be used interchangeably throughout this text. Likewise, the terms "out-of-the-mouth" and "not brushing" may be used interchangeably.

The contact sensor may be selected from; a capacitive sensor which detects current flowing through the body of a user when the brush head or bristles are in contact with the mouth and the handle is in contact with the hand; a capacitive displacement sensor that senses change of position of any conductive target such as the human body; an inductive sensor that uses an inductance loop to measure the proximity of conductors such as the human body; a passive thermal infrared that detects the warmth of the human mouth; a photoelectric sensor that detects reflected IR light emitted and absorbed by the sensor itself; a light sensor that is triggered by darkness inside the mouth; a light sensor that detects the reflection of light from a second light source on the brush when the brush is activated; an ultrasonic and active sonar sensors that uses echo location to detect the confines of the mouth; a magnetic detector that detects the proximity of metals such as the hemoglobin present in blood; a pressure sensor under the brush head that detects movement and pressure of the brush head being pressed against the teeth; a pressure sensor in the neck that detects torque and tension in the neck of the brush due to brushing action; a cantilever switch; or a combination of two or more of these sensor types.

A contact sensor may be a current loop sensor, capacitive sensor, inductive sensor, active or passive IR sensor, active or passive photo sensor, pressure sensor, cantilever switch sensor, moisture sensor, or an ultrasonic sensor any combination thereof.

A movement sensor may be an accelerometer, gyroscope or a combination of the two.

This approach enables rapid and more accurate control of the light to activate or deactivate the light within a few milliseconds. The resulting algorithm can be executed using rules-based programs or with a machine learning approach within less than 500ms and preferably less than 100ms.

Developing the algorithm or training the software involves a 6-step process:
1. The first step involves extensive data collection of the sensor readings over time from the contact sensor and a movement sensor of the toothbrush during realistic brush scenarios such as brushing with the right and left hand, using the brush with an electric motor, rinsing under the faucet, cleaning the brush head with a finger, applying toothpaste and so forth. The data capture may employ a parallel video sequence to ensure that later manual classification can be performed on the data and mapped to the time readings. Preferably the data is collected from as many people as possible to accommodate different brushing styles and usage patterns.
2. The captured data can be uploaded and analyzed on a high-performance workstation with machine learning software such as R or the MatLab classification learner.
3. The data can be sub-divided into time segments or epochs. Preferably, each epoch is between 0.5 seconds to 3 seconds.
4. Each data epoch can be manually classified as to when the toothbrush is in contact with the mouth, outside the mouth and/or whether the end-user is actively brushing or not brushing, for example by video review.
5. The sensor data can be processed to perform a set of mathematical and statistical analysis functions to extract distinct time series features for each epoch such as average value, mean value, maximum value, volatility, Root Mean Square, zero crossing rate, standard deviation, maximum excursion, absolute extreme value, fast Fourier transforms, spectral distribution of time series sensor data to determine spectral frequency distribution, spectrum amplitude for multiple frequency bands, spectrum standard deviation, mean frequency, peak frequency, mean value, volatility and other statistically significant feature variables. This feature extraction process may be performed on movement sensor variables including x, y, and z acceleration, yaw, pitch and roll, and readings from the contact sensor.
6. Using manual classifications from step 4, a machine learning algorithm can be trained to classify new data based on previous manual classifications and extracted features from existing data epochs. Such an algorithm may employ a machine learning classification model such as Naive Bayes, Support Vector Machines, Decision Trees, Linear Discriminant Analysis, K-Nearest Neighbors, or Bagged Trees. Neural networks may also be employed provided that the neural network has at least 2 hidden layers and at least 8 nodes. Alternatively, a programmer can look for statistical patterns in the features and build rules and probabilities manually.

It is understood that a machine learning algorithm can be replaced with a rules engine where classification rules are preprogrammed by a human. However, the machine learning approach offers more flexibility as new data is collected which can readily be incorporated with minimal human intervention. Through our analysis we have discovered the usefulness of the accelerometer readings measured parallel to the shaft of the toothbrush handle which we refer to as the "y-axis". Of course, it is possible to align the movement sensor in a different way which did not have an axis parallel to the drive shaft of the toothbrush. However, through simple trigonometry we can infer the identical information with simple angular shifting of the frame of reference. Similarly, it is possible to calculate the angles of rotation relative to earth's gravity using the moving average acceleration. With a motor running it may be necessary to apply a low pass filter to the movement signal to filter out high frequency noise above approximately 20Hz and at least above 100 Hz. It is understood that a low-pass filter can also be used in place of a moving average function as the results are very similar when applied to time series data.

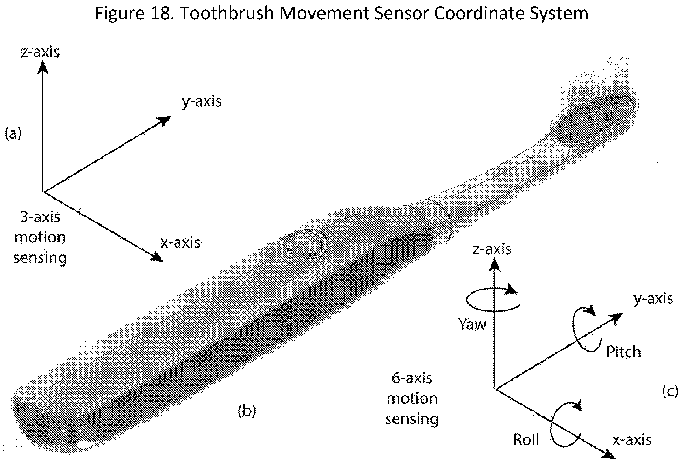

We can extract actionable data over a defined time-period of between 20ms to 2000ms by calculating features from the measured acceleration along each of the x, y and z axis, rotation angles relative to gravity and, if a 6-axis motion sensor is used, we can measure rotation along the x, y and z axis commonly referred to as roll, pitch and yaw as depicted in the example coordinate system in figure 18(a) and (c) in relation to the toothbrush undergoing such movements as seen in figure 18(b). These motion readings can be combined with the readings of the contact sensor to calculate features that can be used in automatic classification of an in-the-mouth condition, active brushing of teeth, or outside the mouth condition.

A contact sensor reading typically is measured as a voltage captured and applied to an analog to digital converter. Regardless of the type of contact sensor and method of conversion from a contact sensor to a digital value, the contact reading is typically converted to a digital scalar value from which mathematical features can be extracted in a similar manner to the acceleration and rotation data along a time-series.

Numerical classification features that are used in pattern recognition and that are calculated using time series data may include, for example:
- moving average values, including but not limited to:
   o mean value
   o exponential moving average
   o low-pass filtered value
- volatility of values which reflects the degree of variance over time, including but not limited to:
   o root mean squared deviation from average (RMS)
   o standard deviation
   o absolute difference between min / max
   o maximum value
   o maximum excursion
   o absolute extreme value
- frequency distribution of the spectrum of values, including but not limited to:
   o Fast Fourier Transform (FFT)
   o Welch spectrum
   o Wavelet analysis
   o zero crossing rate
   o spectrum amplitude for multiple frequency bands
   o spectrum standard deviation
   o mean frequency
   o peak frequency

At least two and preferably about five sensor readings can used in classification feature creation including:
- X, Y, and Z axis acceleration
- Roll, Pitch and Yaw
- Angles of rotation relative to earth's gravity
- Numerical readings from a contact sensor

Extracting these pattern recognition features from the movement data and contact data we can train a suitable machine learning algorithm with manually pre-classified data where the correct determination of whether the toothbrush is in or out of the mouth or active brushing is occurring is known in advance. The classification algorithm may use at least three combinations of classification features applied to time-series data sets and preferably about five to seven combinations.

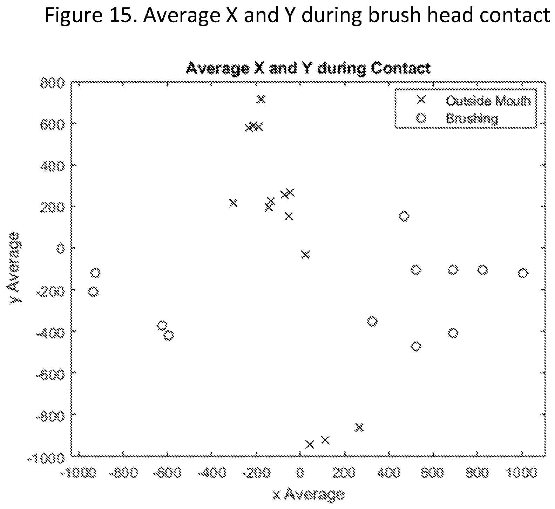

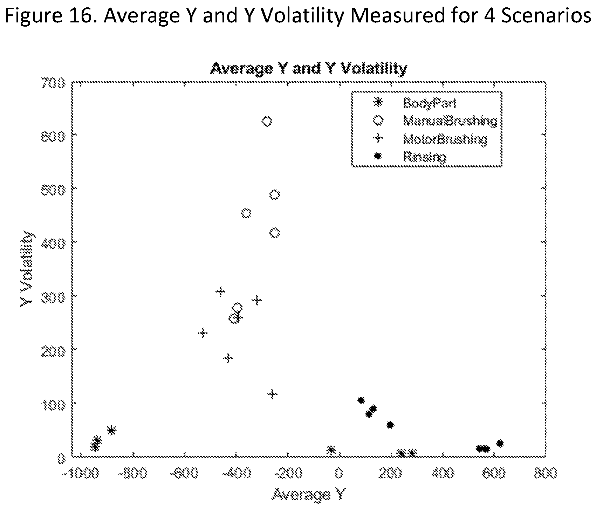

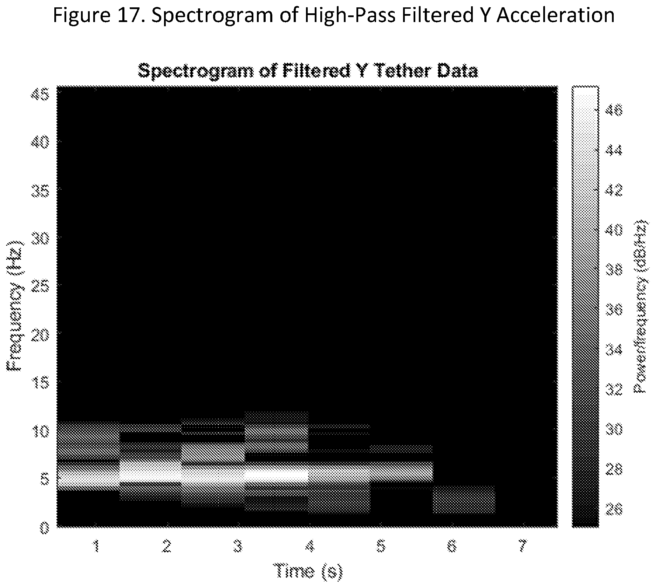

The example charts in Figs. 15-17 depict the average x reading and y readings of the accelerometer during multiple recorded contact events where some contact events involved brushing in the mouth and some contact events where recorded outside of the mouth. The figures including average values (figure 15), volatility (figure 16), and frequency distribution (figure 17) of these events.

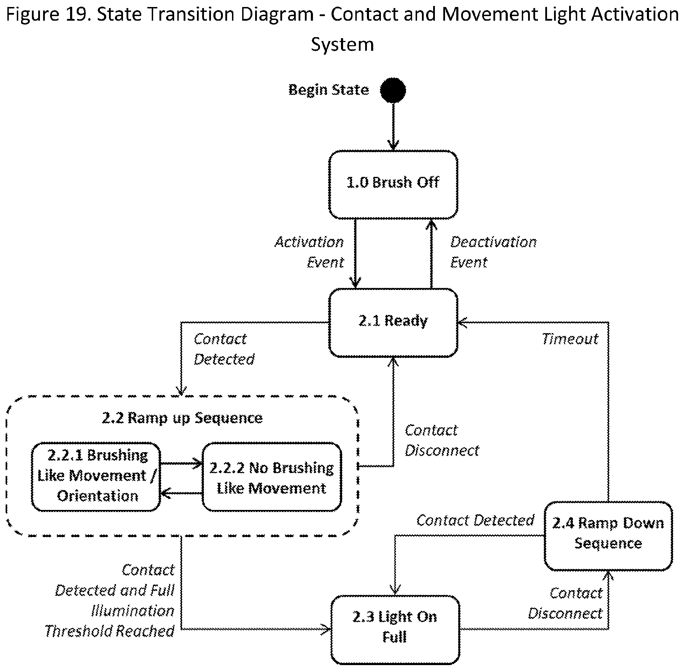

Figure 19 depicts one example embodiment of a dual sensor activation system state transition diagram which combines data from a contact sensor and data from a movement sensor to gradually activate the light emanating from the toothbrush. In this configuration, the software controller may be implemented using a microcontroller, ASIC, FPGA or other computing device connected to a contact sensor present in the toothbrush, preferably in the neck or head of the toothbrush, and a movement sensor located in the toothbrush, preferably located in the handle.

The toothbrush may start in an off mode or sleep mode but an activation event such as detected movement, change in orientation, or a button press, may activate the electronics. Likewise, the electronics may be deactivated by a button press or a period of inactivity where there is no movement. Since the algorithmic processing of movement data can be computationally expensive as well as consuming valuable battery power, the microcontroller or other computing device can be placed in sleep mode until a predetermined event is detected through an interrupt port, such as a movement, change in orientation or button press. Sleep mode can also be implemented through a periodic sleep/polling cycle though the interrupt port is a more efficient method.

Once in a "Ready State", the toothbrush may begin processing data from the contact sensor and movements sensors to determine whether the toothbrush is in the mouth or the user has commenced brushing. Preferably, the combination of contact and movement together will increase the confidence that the teeth are being brushed or that the toothbrush is in contact with the mouth of the end-user.

### Ramp-Up State

The Ramp Up sequence 2.2 may commence when a threshold is exceeded by one of the contact sensors and the toothbrush state will remain in ramp-up as long as contact is maintained or until full light intensity is reached.

In the ramp-up state, signals from a motion sensor such as a MEMs accelerometer, or MEMs gyroscope can be used to detect movement and/or the direction of gravity. For example, an accelerometer connected to a microcontroller and software can be used to determine whether:
- The brush head is facing upwards, downwards or sideways;
- The brush is in a supine (neck and handle at same elevation), inclined (neck pointing up), declined (neck pointing down) or vertical position (neck pointing straight up);
- The brush was recently moved upwards (opposing gravitational pull) or downwards (in the direction of gravity; and/or
- The brush is being shaken, lifted, lowered or rotated.

The sensor input from the current loop, capitative sensors or several other types of contact sensors listed previously can be combined with secondary motion sensor signal to establish a tier-based confidence threshold using a classification algorithm. Motion sensor signals can be processed to establish conditions which increase or decrease confidence that the toothbrush is in the mouth. For example:
Conditions that Increase Confidence that the Toothbrush is in the Mouth:
   - Toothbrush average absolute acceleration minus gravity for the past second is within a predetermined threshold
   - The toothbrush is inclined such that brush head is above the handle
   - The toothbrush was lifted by at least 20 mm within 5 seconds prior to closing of the current loop or capacitive sensor
   - The brush was rotated within the past 2 seconds, prior to the contact sensor detecting contact, such that the incline of the brush was decreased, which is consistent with the brush being inserted into the mouth. This is because users tend to tilt the toothbrush to a near horizontal position immediately prior to inserting in the mouth. This tilt is typically less than 25 degrees but with the brush head of the toothbrush slightly above the handle.
   - The brush is being shaken in an oscillatory pattern with a frequency and amplitude in a manner consistent with manual brushing, typically between 2 Hz and 6 Hz, a distance of between 2 mm and 20 mm, a velocity of between 10 mm/s and 200 mm/s and an acceleration of between 5% and 50% of earth's surface gravity.
Conditions that Decrease Confidence that the Toothbrush is in the Mouth:
   - Toothbrush is stationary for the past 3 seconds
   - The toothbrush is declined such that brush head is below the handle
   - The toothbrush was lowered by at least 20 mm within 5 seconds prior to closing of the current loop or capacitive sensor

If the algorithm determines confidence is high that the toothbrush has been placed in the mouth, the light can be gradually increased in intensity over a period of at least 0.5 seconds and preferably about 5 seconds, as long as the brush remains in the mouth, using a light intensity ramp pattern which may be linear, a step function, fast attack or fast finish pattern. (State 2.3)

If the movement is not consistent with brushing, then the toothbrush may remain in a ramp-up state, so long as the contact sensor signal is above a predetermined threshold, but the light will not increase in intensity until brushing-like movements commence or continue.

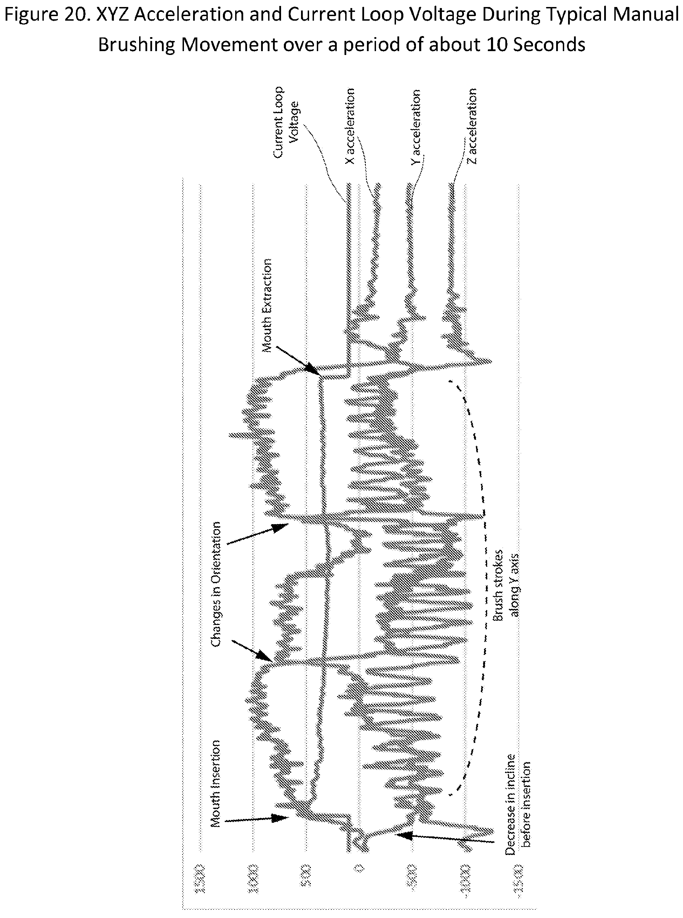

In the case of a manual toothbrush an algorithm can be used to detect the rhythmic motion of manual brushing as depicted in Figure 20, which shows data plotted over time as the toothbrush placed in the mouth when the current loop voltage detected across a voltage divider jumps because an electrical circuit is closed via bio-electrical conductance of the users body, from the electrode in the handle to the electrode in the brush head.

Moving from an open state to a closed state causes the detected current loop voltage to rise above a predetermined threshold. Rhythmic motion of manual brushing along the Y axis is discernable by a software algorithm. Another discernable pattern is the decrease in Y acceleration immediately prior to the insertion into the mouth as detected through an alternate sensor combined with the accelerometer. This is due to a change in orientation of the toothbrush shaft from a vertical to horizontal orientation. In this example, the sensor is a current loop, but it may be any of the contact sensor types described above.

A pattern recognition algorithm may be employed to discriminate toothbrushing from other types of movement by identifying a pattern and comparing each brush stroke to the previous brush stroke(s). In one embodiment, microcontroller-based software, incorporates an algorithm to calculate relative movement by comparing acceleration data to a moving average calculated across a history of data samples. A brush stroke can be evaluated each time acceleration crosses over the moving average. Brushing data might include relative movement data for each brush stroke:
- Frequency
- Acceleration
- Velocity
- Distance

By storing movement history data for between 500 - 5,000 milliseconds or using an exponential moving average (EMA), a brush stroke relative movement data can be compared to recent brush stroke data and if they are similar enough to each other it confirms that a brushing pattern is present. Furthermore, the relative movement data can be compared to predetermined thresholds based on realistic brushing movements.

If the algorithm determines that a likely brushing motion is occurring, in combination with activation signals from one of the secondary contact sensors listed above, the light can be gradually increased in intensity according to a linear, step function or fast finish pattern in tandem with the brushing movement as long as the algorithm determines that the user is actively brushing. The gradual increase in light intensity should occur over at least 500 milliseconds and preferably about 5 seconds under normal brushing conditions.

Another embodiment employs a signal analysis algorithm such as Fast Fourier Transform (FFT) or Finite Impulse Response (FIT), or Kalman filters to examine the frequency and amplitude of brushing strokes and compare them to predetermined patterns and thresholds based on typical brushing patterns.

However, when the toothbrush is motorized, the user may not use a rhythmic brushing movement at all instead relying on the motor for plaque removal. Furthermore, since the motor itself will typically create "acceleration noise" in the accelerometer signal, a smoothing function or noise filter may first be applied to calculate orientation and movement data. With motorized power toothbrush operation, the movement sensors may be used in combination with the contact sensors using a different algorithm than the manual brushing algorithm described above. In addition to attempting to identify brush strokes, the algorithm may focus on other orientation and movement patterns such as the decrease in incline of the brush just prior to contact detection. Another signal to indicate mouth insertion is a slight upwards incline upon activation of the contact sensor and changes in orientation along the axis parallel to the shaft of the toothbrush, indicating shifting between the occlusal/incisal, buccal and lingual surfaces of the teeth. With suitable algorithms, the motion sensor can be used to detect any of the conditions described in the sections describing conditions that increase/decrease confidence that the toothbrush is in the mouth.

### Light On Full State (2.3) and Ramp-Down State (2.4)

The toothbrush may exit Light On Full State 2.3 if contact disconnect is detected and may enter a ramp-down state 2.4 which lasts for a predetermined interval. The purpose of the ramp-down state is to avoid unnecessary ramp-up because contact with the brush head is only temporarily disconnected as it is being moved around the mouth. Once the toothbrush enters ramp-down state it has a predetermined timeout before it switches to ready state 2.1 or returns to light on full state 2.3 if contact is restored.

### Haptic Feedback, Motor Activation and Programming

When the toothbrush is turned on in state 1, such as by pressing an on/off button, the motor may be at first actuated but at a power level below 50% and preferably around 10% to provide haptic feedback to the end user without causing water to spatter. When a sensor detects the toothbrush head being placed in the mouth, the motor ramps to a predetermined power level.

Another feature made possible through a brush head sensor is a is a programmable motor strength. With this feature the user can preset a desired motor strength and have the toothbrush always activate at the preset motor strength when placed in the mouth.

In one embodiment, the programming mode is activated by pressing the ON/OFF button for longer than a predetermined interval, such as 5 seconds, while holding the brush head in the mouth. The combination of button press, and sensed mouth contact allow the microcontroller to switch to a programming mode.

In this mode, the motor ramps up from its lowest power setting to its highest power setting over a period of 10 seconds where it remains 2 seconds before ramping down to lowest power rating over a period of 10 seconds pausing for 2 seconds then repeat ramp cycle.

When the user releases the ON button or removes the brush from the mouth, the microcontroller software exits programming mode and the preset power level is now set at the new level it was when upon exit.

Certain modifications and improvements will occur to those skilled in the art upon reading the foregoing description. The following clauses summarise the inventions described herein:
Clause 1: An electric power toothbrush comprising
   a handle in a proximal end and a brush head in a distal end,
   a drive shaft which conveys kinetic energy from a motor located in the proximal end of the toothbrush to bristles located in the distal end of the toothbrush, wherein;
      the drive shaft includes a light guide containing at least two layers of an optical medium of differing refractive indices to enable total internal reflection within the light guide, and
      a light source located in the proximal end of the toothbrush which injects light with a wavelength of between 400nm and 500nm into the light guide and light exits the distal end of the toothbrush.
Clause 2: An electric power toothbrush as defined in Clause 1 wherein the handle has a proximal drive shaft, the brush head is replaceable, and a connector on the proximal drive shaft connects to a connector on the brush head and also serves as an optic ferrule for the light guide.
Clause 3: An electric power toothbrush as defined in Clause 2 wherein the inner perimeter of both connectors encompass the outer perimeter of the light guide.
Clause 4: An electric power toothbrush as defined in Clause 1 comprising a light source concentrator wherein the light source is stationary with respect to the handle of the toothbrush and neither the light source nor the light source concentrator touches the light guide.
Clause 5: An electric power toothbrush as defined in Clause 1 wherein the light source is located closer to the distal end than the motor.
Clause 6: An electric power toothbrush as defined in Clause 1 wherein an axis central to a path of light exiting the light source is coaxially aligned with the drive shaft axis to within 15 degrees.
Clause 7: An electric power toothbrush as defined in Clause 1 wherein the light source is a laser diode or an LED with a radiant output of at least 10mW and the diameter of the light guide is less than 4mm.
Clause 8: An electric power toothbrush as defined in Clause 1 comprising a gear assembly housing and wherein the light source is mounted inside the gear assembly housing.
Clause 9: An electric power toothbrush as defined in Clause 1 wherein light emanating from the light source is injected into the light guide via a light concentrator assembly selected from the group consisting of a refractive lens, a TIR concentrator, a mirror tube, and a white reflector tube, such that at least 50% of the light energy emanating from the light concentrator assembly enters the light guide with an angle of incidence less that the minimum angle of incidence required to permit total internal reflection in the light guide.
Clause 10: An electric power toothbrush as defined in Clause 1 wherein the drive shaft has an opaque outer shell of a material with a Youngs modulus of at least 0.5 GPa which envelops the sides but not apertures of the light guide.
Clause 11: An electric power toothbrush as defined in Clause 1 wherein the light guide has an inner core having refractive index greater than 1.5.
Clause 12: An electric power toothbrush as defined in Clause 1 wherein the brush head has an internal reflective surface that has a reflectance index of at least 80% and a transparent or translucent tuft plate, and light emanating from the light guide within the brush head is diffusely reflected by the reflective surface within the brush head and exits the brush head through the transparent or translucent tuft plate.
Clause 13: An electric power toothbrush as defined in Clause 1 wherein the light source also emits light in the range of 600nm to 1200nm in addition to 400nm to 500nm.
Clause 14: An electric power toothbrush as defined in Clause 1 wherein the electric power toothbrush operates in mode selected from the group consisting of: a dual direction rotating oscillating spin brush with a rotating gear assembly to drive a secondary crank shaft which creates a side-to-side oscillating motion on the primary drive shaft; a unidirectional rotating spin brush typically which uses bevel gears in the brush head to translate rotation motion at about a 90-degree angle to the drive shaft; a dual direction rotating oscillating spin brushes that uses a gear assembly to create forward and backwards motion on the drive shaft; and a sonic toothbrush which oscillates the brush head on an axis that is roughly parallel to the shaft of the toothbrush using a torsion spring and a permanent magnet connected to the drive shaft energized by an electromagnetic which energizes the permanent magnet at a mechanical resonance frequency.
Clause 15: An electric power toothbrush as defined in Clause 1 wherein the toothbrush is a sonic toothbrush which contains a light injection assembly which is enveloped by an outer housing that is part of the drive shaft.
Clause 16: A toothbrush with a source of light with a wavelength in the range of 400 nm to 500 nm, the brush including a handle and a distal end,
   wherein the distal end has a tuft plate having bristles, the tuft plate being made of a hydrophilic polymer or is made of another polymer and having channels or a texture such that the water contact angle of the tuft plate is less than 90 degrees causing the other polymer to become hydrophilic, the tuft plate being at least partially transparent to enable light to be emitted from the tuft plate,
   wherein the handle has an electrical contact and the tuft plate has an electrical contact, the electrical contacts and electronics forming a sensor to determine whenever the distal end is outside the environment of the mouth and to permit activation of the source of light when the sensor determines that the contact on the tuft plate is inside the mouth of the user and the handle is held in a user's hand.
Clause 17: A toothbrush with a source of light as defined in Clause 16 wherein area adjacent to the tuft plate is hydrophobic with a water contact angle greater than 90 degrees.
Clause 18: A toothbrush with a source of light as defined in Clause 16 wherein the tuft plate has a surface that has a Society of the Plastics Industry texture rating of B, C or D.
Clause 19: A toothbrush with a source of light as defined in Clause 16 wherein the tuft plate has a light transmittance of at least 50% for a 1 mm sheet at a wavelength of 450nm.
Clause 20: A toothbrush with a source of light as defined in Clause 19 wherein the tuft plate has a light transmittance below 50% at a wavelength below 400nm.
Clause 21: A toothbrush with a source of light as defined in Clause 16 wherein the tuft plate has holes at least one of which has an interior comprised of a conductive material electrically connected to the electronics.
Clause 22: A toothbrush with a source of light as defined in Clause 16 wherein the toothbrush is a motorized toothbrush and the electrical contact in the tuft plate is a drive or axial pin of a motorized toothbrush.
Clause 23: A toothbrush with a source of light as defined in Clause 16 wherein the electronics employ either a current loop or capacitive sensing between the electrical contact in the handle and the electrical contact in the tuft plate to determine when the toothbrush is in the mouth of the end user.
Clause 24: A toothbrush with a source of light with a wavelength in the range of 400 nm to 500 nm, the brush including a handle, a distal end, a contact sensor that provides contact data, a movement sensor that provides movement data, and a computing device located in the toothbrush, such that movement data and contact data can be processed using an algorithm which calculates classification features from the movement data and contact data, where such classification features are used to determine when the toothbrush is placed in the mouth or the end-user has commenced brushing so as to activate the light.
Clause 25: A toothbrush with a source of light as defined in Clause 24 wherein at least three combinations of classification features applied to time-series data sets are evaluated by the algorithm.
Clause 26: A toothbrush with a source of light as defined in Clause 25 wherein the classification features including at least one of moving average, low-pass filtered value, volatility and frequency distribution.
Clause 27: A toothbrush with a source of light as defined in Clause 25 wherein the classification features are calculated from at least two types of time-series sensor data selected from X, Y, and Z axis acceleration, roll, pitch, yaw, angles of rotation relative to earth's gravity, and readings from a contact sensor.
Clause 28: A toothbrush with a source of light as defined in Clause 24 wherein the algorithm is developed using machine learning where the determination as to whether the end-user has placed the toothbrush in the mouth can be established based on a classification function generated from training with manually classified data according to whether the toothbrush is in contact with the mouth, outside the mouth or whether the end-user is brushing or not brushing.
Clause 29: A toothbrush with a source of light as defined in Clause 28 wherein the machine learning classification method employs at least one of these algorithms; Naive Bayes, Support Vector Machines, Decision Trees, Linear Discriminant Analysis, K-Nearest Neighbors, Bagged Trees or a Neural Network with at least 2 hidden layers and at least 8 nodes.
Clause 30: A toothbrush with a source of light as defined in Clause 24 wherein the light may not become activated without a 2-phase activation alarm such that the light is preceded by another user event.
Clause 31: A toothbrush with a source of light as defined in Clause 30 wherein a first phase activation event is selected from the group consisting of: a flashing light or low intensity light, a glowing light at less than 20% of the maximum radiant intensity of the light's source, activation of a motor in a spin brush or sonic style toothbrush, pressing an on/off switch of the toothbrush, or more than one of them.
Clause 32: A toothbrush with a source of light as defined in Clause 24 wherein
   the movement sensor is selected from the group consisting of a 3-axis accelerometer, a gyroscope, a 6-axis movement sensor or a combination of these; and
   the contact sensor is selected from the group consisting of a capacitive sensor that detects current flowing through the body of a user when the brush head or bristles are in contact with the mouth and the handle is in contact with the hand, a capacitive displacement sensor that senses change of position of any conductive target, an inductive sensor that uses an inductance loop to measure the proximity of conductors such as the human body, a passive thermal infrared that detects the warmth of the human mouth, a photoelectric sensor that detects reflected IR light emitted and absorbed by the sensor itself, a light sensor that is triggered by darkness inside the mouth, a light sensor that detects reflection of light from a second light source on the brush when the brush is activated, an ultrasonic or active sonar sensor that uses echo location to detect the confines of the mouth, a magnetic detector that detects the proximity of metals such as the hemoglobin present in blood. a pressure sensor under the brush head that detects movement and pressure of the brush head being pressed against the teeth, a pressure sensor in a neck of the brush that detects torque and tension in the neck of the brush due to brushing action, a cantilever switch, or a combination of two or more of these contact sensor types.
Clause 33: An electric power toothbrush comprising
   a handle having a motor and a light source located in a proximal end of the toothbrush, the light source emitting light with a wavelength of between 400nm and 500nm,
   a brush head in a distal end of the toothbrush,
   a drive shaft which conveys kinetic energy from the motor in the handle to the brush head, the drive shaft including a light guide guiding light from the light source to the distal end of the toothbrush and containing at least two layers of an optical medium of differing refractive indices to enable total internal reflection within the light guide,
   the brush head having a tuft plate having bristles, the tuft plate being made of a hydrophilic polymer or being made of another polymer and having channels or a texture such that the water contact angle of the tuft plate is less than 90 degrees causing the other polymer to become hydrophilic, the tuft plate being at least partially transparent to enable light to be emitted from the tuft plate,
   the handle having an electrical contact and the tuft plate having an electrical contact to make a contact sensor that provides contact data,
   a movement sensor that provides movement data, and
   a computing device, the computing device processing movement data and contact data using an algorithm which calculates classification features from the movement data and contact data, where such classification features are used to determine when the toothbrush is placed in the mouth or the end-user has commenced brushing so as to activate the light to determine whenever the distal end is outside the environment of the mouth and to permit activation of the source of light when the sensor determines that the contact on the tuft plate is inside the mouth of the user and the handle is held in a user's hand.

## Claims

1. A toothbrush with a source of light with a wavelength in the range of 400 nm to 500 nm, the brush including a handle and a distal end,
wherein the distal end has a tuft plate having bristles, the tuft plate being made of a hydrophilic polymer or is made of another polymer and having channels or a texture such that the water contact angle of the tuft plate is less than 90 degrees causing the other polymer to become hydrophilic, the tuft plate being at least partially transparent to enable light to be emitted from the tuft plate,
wherein the handle has an electrical contact and the tuft plate has an electrical contact, the electrical contacts and electronics forming a sensor to determine whenever the distal end is outside the environment of the mouth and to permit activation of the source of light when the sensor determines that the contact on the tuft plate is inside the mouth of the user and the handle is held in a user's hand.

2. A toothbrush with a source of light as claimed in claim 1 wherein area adjacent to the tuft plate is hydrophobic with a water contact angle greater than 90 degrees.

3. A toothbrush with a source of light as claimed in claim 1 wherein the tuft plate has a surface that has a Society of the Plastics Industry texture rating of B, C or D.

4. A toothbrush with a source of light as claimed in claim 1 wherein the tuft plate has a light transmittance of at least 50% for a 1 mm sheet at a wavelength of 450nm.

5. A toothbrush with a source of light as claimed in claim 4 wherein the tuft plate has a light transmittance below 50% at a wavelength below 400nm.

6. A toothbrush with a source of light as claimed in claim 1 wherein the tuft plate has holes at least one of which has an interior comprised of a conductive material electrically connected to the electronics.

7. A toothbrush with a source of light as claimed in claim 1 wherein the toothbrush is a motorized toothbrush and the electrical contact in the tuft plate is a drive or axial pin of a motorized toothbrush.

8. A toothbrush with a source of light as claimed in claim 1 wherein the electronics employ either a current loop or capacitive sensing between the electrical contact in the handle and the electrical contact in the tuft plate to determine when the toothbrush is in the mouth of the end user.

9. A toothbrush with a source of light with a wavelength in the range of 400 nm to 500 nm, the brush including a handle, a distal end, a contact sensor that provides contact data, a movement sensor that provides movement data, and a computing device located in the toothbrush, such that movement data and contact data can be processed using an algorithm which calculates classification features from the movement data and contact data, where such classification features are used to determine when the toothbrush is placed in the mouth or the end-user has commenced brushing so as to activate the light.

10. A toothbrush with a source of light as claimed in claim 9 wherein at least three combinations of classification features applied to time-series data sets are evaluated by the algorithm including at least one of moving average, low-pass filtered value, volatility and frequency distribution

11. A toothbrush with a source of light as claimed in claim 10 wherein the classification features are calculated from at least two types of time-series sensor data selected from X, Y, and Z axis acceleration, roll, pitch, yaw, angles of rotation relative to earth's gravity, and readings from a contact sensor.

12. A toothbrush with a source of light as claimed in claim 9 wherein the algorithm is developed using machine learning where the determination as to whether the end-user has placed the toothbrush in the mouth can be established based on a classification function generated from training with manually classified data according to whether the toothbrush is in contact with the mouth, outside the mouth or whether the end-user is brushing or not brushing.

13. A toothbrush with a source of light as claimed in claim 12 wherein the machine learning classification method employs at least one of these algorithms; Naive Bayes, Support Vector Machines, Decision Trees, Linear Discriminant Analysis, K-Nearest Neighbors, Bagged Trees or a Neural Network with at least 2 hidden layers and at least 8 nodes.

14. A toothbrush with a source of light as claimed in claim 9 wherein the light may not become activated without a 2-phase activation alarm such that the light is preceded by another user event.

15. A toothbrush with a source of light as claimed in claim 9 wherein
the movement sensor is selected from the group consisting of a 3-axis accelerometer, a gyroscope, a 6-axis movement sensor or a combination of these; and
the contact sensor is selected from the group consisting of a capacitive sensor that detects current flowing through the body of a user when the brush head or bristles are in contact with the mouth and the handle is in contact with the hand, a capacitive displacement sensor that senses change of position of any conductive target, an inductive sensor that uses an inductance loop to measure the proximity of conductors such as the human body, a passive thermal infrared that detects the warmth of the human mouth, a photoelectric sensor that detects reflected IR light emitted and absorbed by the sensor itself, a light sensor that is triggered by darkness inside the mouth, a light sensor that detects reflection of light from a second light source on the brush when the brush is activated, an ultrasonic or active sonar sensor that uses echo location to detect the confines of the mouth, a magnetic detector that detects the proximity of metals such as the hemoglobin present in blood. a pressure sensor under the brush head that detects movement and pressure of the brush head being pressed against the teeth, a pressure sensor in a neck of the brush that detects torque and tension in the neck of the brush due to brushing action, a cantilever switch, or a combination of two or more of these contact sensor types.
